(19) Europäisches Patentamt
European Patent Office
Office européen des brevets

(11) **EP 4 339 860 A1**

(12) **DEMANDE DE BREVET EUROPEEN**

(43) Date de publication:
**20.03.2024 Bulletin 2024/12**

(21) Numéro de dépôt: **23197011.2**

(22) Date de dépôt: **12.09.2023**

(51) Classification Internationale des Brevets (IPC):
**G06Q 10/0631** (2023.01)    **G06Q 10/10** (2023.01)
**G06Q 50/08** (2012.01)

(52) Classification Coopérative des Brevets (CPC):
**G06Q 10/0631; G06Q 10/103; G06Q 50/08**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **13.09.2022 FR 2209206**

(71) Demandeur: **Somfy Activites SA**
**74300 Cluses (FR)**

(72) Inventeurs:
• **CHERON, Eric**
**74300 CLUSES (FR)**
• **RETY, Claudia**
**74300 CLUSES (FR)**

• **AUBERT, Antoine**
**74300 CLUSES (FR)**
• **CORVI, Adeline**
**74300 CLUSES (FR)**
• **FERREIRA, Mathieu**
**74300 CLUSES (FR)**
• **THOUIN, Vincent**
**74300 CLUSES (FR)**
• **DANKO, Peter**
**74300 CLUSES (FR)**
• **MELHEM, Olivier**
**74300 CLUSES (FR)**

(74) Mandataire: **Novaimo**
**Europa 1**
**362, avenue Marie Curie**
**Archamps Technopole**
**74166 Saint-Julien-en-Genevois Cedex (FR)**

(54) **PROCÉDÉ DE FONCTIONNEMENT D'UN DISPOSITIF DE GESTION D'UNE PHASE DE SECOND UVRE DE RÉALISATION D'UN BÂTIMENT**

(57)    Procédé de fonctionnement d'un dispositif de gestion (81) d'une phase de second oeuvre de réalisation d'un bâtiment (1), le procédé comprenant :
- une étape (S1) de définition d'au moins un premier intervenant et un deuxième intervenant devant exécuter chacun au moins une tâche de la phase de second oeuvre,
- une étape (S2) de définition d'un planning d'exécution des tâches de la phase de second oeuvre, l'étape de définition du planning d'exécution des tâches de la phase de second oeuvre comprenant une définition d'une tâche d'installation d'au moins un appareil électrique à installer,
- une étape (S3) de calcul d'un degré d'exécution d'au moins une tâche de la phase de second oeuvre devant être exécutée par le premier intervenant, l'étape de calcul du degré d'exécution de l'au moins une tâche de la phase de second oeuvre étant automatiquement basée sur un état d'installation de l'au moins un appareil électrique, et
- une étape (S4) de communication du degré d'exécution de l'au moins une tâche de la phase de second oeuvre au moins au deuxième intervenant.

S0
S1
S2
S3
S4

FIG.7

**Description**

La présente invention concerne un procédé de fonctionnement d'un dispositif de gestion d'une phase de second oeuvre de réalisation d'un bâtiment. L'invention concerne aussi un dispositif de gestion mettant en oeuvre un tel procédé de fonctionnement.

Dans le domaine de la construction des bâtiments, on divise la réalisation des bâtiments en plusieurs phases, notamment :

- une phase de gros oeuvre ayant pour objet la réalisation de la structure ou ossature du bâtiment, puis
- une phase de second oeuvre ayant pour objet l'équipement de cette structure pour former un bâtiment fonctionnel. Cette phase de second oeuvre est aussi appelée « phase d'aménagement et d'habillage du bâtiment en vue de son habitabilité » ou encore « phase d'oeuvre léger », en anglais « building finishing work ».

Ces phases sont des préalables à la livraison du bâtiment au propriétaire ou occupant.

Dans cette phase de second oeuvre, on effectue par exemple les opérations d'installation :

- d'électricité,
- de télécommunication,
- de plomberie,
- de chauffage,
- de ventilation,
- de climatisation,
- de menuiserie,
- de finition des sols, des murs et des plafond,
- de domotique en lien éventuellement avec les opérations précitées.

Ces opérations, en particulier dans la phase de second oeuvre précitée, nécessitent des travaux très coordonnés et/ou très interdépendants de différents intervenants, en particulier de différents intervenants, faisant partie éventuellement de différentes sociétés, qui sont en charge de différentes tâches d'une même opération ou d'une ou plusieurs tâches de différentes opérations.

En cas de mauvaise organisation de ces différents intervenants, il existe des risques de pertes de temps globale dans la réalisation du bâtiment ou de mauvaises exécutions des tâches, ce qui peut être la cause de dysfonctionnements dans le bâtiment achevé et livrable.

Il existe ainsi un besoin d'un dispositif de gestion d'une phase de second oeuvre de réalisation d'un bâtiment qui permette d'améliorer l'exécution de la phase de second oeuvre.

La présente invention a pour but de résoudre les inconvénients précités et de proposer un dispositif de gestion améliorant les dispositifs de gestion connus et remédiant aux inconvénients mentionnés précédemment. En particulier, le dispositif de gestion selon l'invention permet d'assurer un bon suivi de la phase de second oeuvre de réalisation du bâtiment en communiquant de manière précise des informations pertinentes aux différents intervenants impliqués dans la réalisation de la phase de second oeuvre.

Selon un premier aspect, un procédé selon l'invention est défini par la revendication 1.

Des modes de réalisation du procédé sont définis par les revendications 2 à 14.

Selon le premier aspect, un dispositif selon l'invention est défini par la revendication 15.

Selon un deuxième aspect, l'invention est définie par les propositions suivantes :

1. Procédé de fonctionnement d'un dispositif de gestion (81) d'une phase de second oeuvre de réalisation d'un bâtiment (1), le procédé comprenant :

- une étape (S1) de définition d'au moins un premier intervenant et un deuxième intervenant devant exécuter chacun au moins une tâche de la phase de second oeuvre,
- une étape (S2) de définition d'un planning d'exécution des tâches de la phase de second oeuvre,
- une étape (S3) de calcul d'un degré d'exécution d'au moins une tâche de la phase de second oeuvre devant être exécutée par le premier intervenant, et
- une étape (S4) de communication du degré d'exécution de l'au moins une tâche de la phase de second oeuvre au moins au deuxième intervenant.

2. Procédé de fonctionnement selon la proposition 1, caractérisé en ce que l'étape de définition d'au moins un intervenant comprend une sous-étape de déclaration d'un intervenant et une sous-étape de validation de cet intervenant.

3. Procédé de fonctionnement selon la proposition 1 ou 2, caractérisé en ce que l'étape de calcul du degré d'exécution de l'au moins une tâche de la phase de second oeuvre comprend un comptage d'un nombre de sous-tâches de la phase de second oeuvre qui sont terminées.

4. Procédé de fonctionnement selon l'une des propositions précédentes, caractérisé en ce que l'étape de calcul du degré d'exécution de l'au moins une tâche de la phase de second oeuvre est réitérée au moins pour chaque tâche devant être exécutée à une date donnée du planning.

5. Procédé de fonctionnement selon l'une des propositions précédentes, caractérisé en ce que l'étape (S3) de calcul d'un degré d'exécution d'au moins une tâche de la phase de second oeuvre est basée :

- sur une information fournie par le premier intervenant au dispositif de gestion ou
- sur une information fournie automatiquement au dispositif de gestion à l'issue de l'exécution partielle ou totale de l'au moins une tâche, ou
- sur un temps chronologique en l'absence d'information contradictoire.

6. Procédé de fonctionnement selon l'une des propositions précédentes, caractérisé en ce que le procédé comprend une étape de calcul d'un degré d'avancement de la phase de second oeuvre.

7. Procédé de fonctionnement selon la proposition précédente, caractérisé en ce que le procédé comprend en outre une étape d'affichage du degré d'avancement de la phase de second oeuvre, l'étape d'affichage pouvant notamment comprendre :

- un affichage d'un plan du bâtiment et de représentations des tâches en différents lieux du plan du bâtiment, les représentations des tâches indiquant de préférence un degré d'exécution d'une tâche, et/ou
- un affichage d'un graphique sur lequel sont positionnées des représentations des tâches le long d'un axe temporel, les représentations des tâches indiquant de préférence un degré d'exécution des tâches.

8. Procédé de fonctionnement selon l'une des propositions précédentes, caractérisé en ce que l'étape de définition du planning d'exécution des tâches de la phase de second oeuvre comprend une définition d'une tâche d'installation d'au moins un appareil électrique à installer.

9. Procédé de fonctionnement selon la proposition précédente, caractérisé en ce que l'étape de calcul du degré d'exécution d'au moins une tâche de la phase de second oeuvre est automatiquement basée sur un état d'installation de l'au moins un appareil électrique.

10. Procédé de fonctionnement selon l'une des propositions précédentes, caractérisé en ce que l'étape de définition du planning d'exécution des tâches de la phase de second oeuvre comprend une définition d'une quantité d'appareils électriques à installer et en ce que l'étape de calcul du degré d'exécution de l'au moins une tâche de la phase de second oeuvre comprend un comptage automatique du nombre d'appareils électriques installés.

11. Procédé de fonctionnement selon l'une des propositions précédentes, caractérisé en ce que l'étape de communication du degré d'exécution de l'au moins une tâche de la phase de second oeuvre comprend :

- une sous-étape d'envoi d'un message au deuxième intervenant, notamment un message indiquant qu'il peut intervenir pour exécuter au moins une tâche définie lors de l'étape de définition, et/ou
- une sous-étape d'affichage du degré d'exécution de l'au moins une tâche de phase de second oeuvre sur une interface accessible au premier et au deuxième intervenant.

12. Procédé de fonctionnement selon l'une des propositions précédentes, caractérisé en ce que le procédé de fonctionnement comprend :

- une étape d'enregistrement de données numériques, par exemple des données numériques d'un plan d'architecture, sur un support numérique par le premier intervenant, et
- une étape d'attribution, au deuxième intervenant, de droits d'accès et de modifications sur ces données numériques.

13. Procédé de fonctionnement selon l'une des propositions précédentes, caractérisé en ce que le procédé de fonctionnement comprend :

- une étape d'enregistrement d'une date de fin d'exécution d'une tâche, et
- de préférence, en cas de dépassement de temps imparti pour exécuter une tâche, une nouvelle mise en oeuvre de l'étape de définition du planning d'exécution des tâches de la phase de second oeuvre.

14. Procédé de fonctionnement selon la proposition précédente, caractérisé en ce que l'étape d'enregistrement est déclenchée par une détection automatique d'une fin d'exécution de la tâche, la détection automatique étant par exemple la conséquence :

- d'une mise à jour, sur un serveur, de données de fonctionnement d'un appareil électrique qui a été installé dans le bâtiment, et/ou
- d'un message émis par un appareil électrique qui a été installé dans le bâtiment.

15. Procédé de fonctionnement selon l'une des propositions précédentes, caractérisé en ce que l'étape de définition du planning d'exécution des tâches de la phase de second oeuvre comprend :

- l'utilisation d'un projet type servant de base pour la définition du planning, un utilisateur sélectionnant les tâches qui permettent de définir le planning adapté à la phase de second-oeuvre à réaliser, et/ou

- la sélection d'au moins une fonction entraînant la sélection de tâches associées à l'au moins une fonction.

16. Procédé de fonctionnement selon l'une des propositions précédentes, caractérisé en ce que l'étape de définition du planning d'exécution des tâches de la phase de second oeuvre comprend une saisie guidée, étape par étape, pour que les tâches nécessaires à la définition du planning soient sélectionnées.

17. Dispositif de gestion (81) comprenant des éléments (91, 92, 93, 94) matériels et/ou logiciels mettant en oeuvre le procédé selon l'une des propositions précédentes, notamment des éléments matériels (91, 92, 93, 94) et/ou logiciels conçus pour mettre en oeuvre le procédé selon l'une des propositions précédentes.

La présente invention porte aussi sur un produit programme d'ordinateur téléchargeable depuis un réseau de communication et/ou enregistré sur un support de données lisible par un ordinateur et/ou exécutable par un ordinateur, caractérisé en ce en ce qu'il comprend des instructions qui, lorsque le programme est exécuté par un ordinateur, conduisent celui-ci à mettre en oeuvre le procédé de fonctionnement défini précédemment.

La présente invention porte encore sur un support d'enregistrement lisible par ordinateur comprenant des instructions qui, lorsqu'elles sont exécutées par un ordinateur, conduisent celui-ci à mettre en oeuvre le procédé de fonctionnement défini précédemment.

L'invention porte encore sur un signal d'un support de données, portant le produit programme d'ordinateur défini précédemment.

D'autres particularités et avantages de l'invention apparaîtront encore dans la description ci-après, faite en référence aux dessins annexés, donnés à titre d'exemples non limitatifs et dans lesquels :

la figure 1 est une vue d'une installation à laquelle l'invention peut être appliquée ;
la figure 2 est une vue schématique d'une telle installation ;
la figure 3 est une vue d'un exemple appareil domotique de l'installation ;
la figure 4 est une vue schématique d'un mode de réalisation d'une dispositif de gestion selon l'invention ;
la figure 5 est une illustration d'une interface homme-machine d'un tel dispositif de gestion dans un premier état d'affichage ;
la figure 6 est une illustration de l'interface homme-machine du dispositif de gestion dans un deuxième état d'affichage ;
la figure 7 est un ordinogramme d'un mode d'exécution d'un procédé de fonctionnement d'un dispositif de gestion selon l'invention.

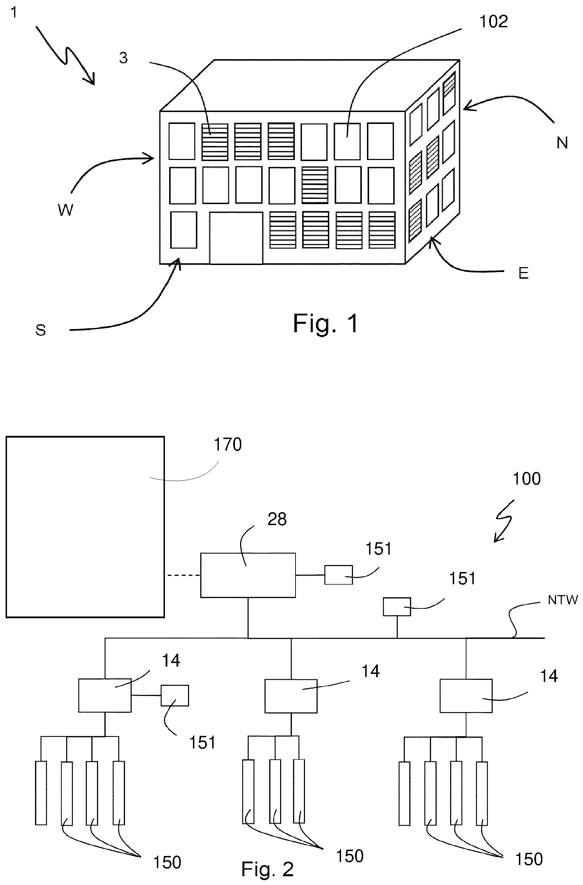

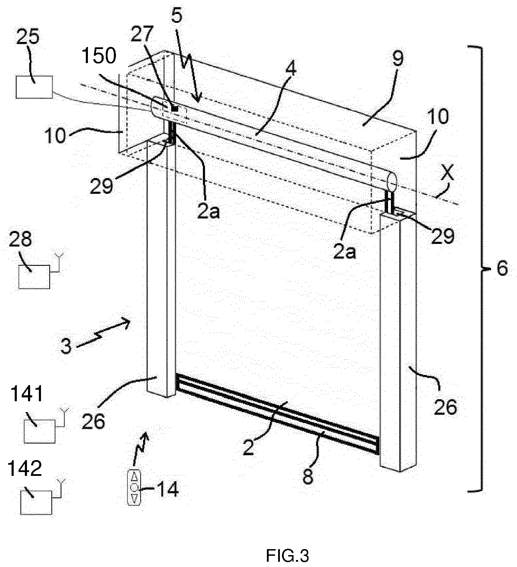

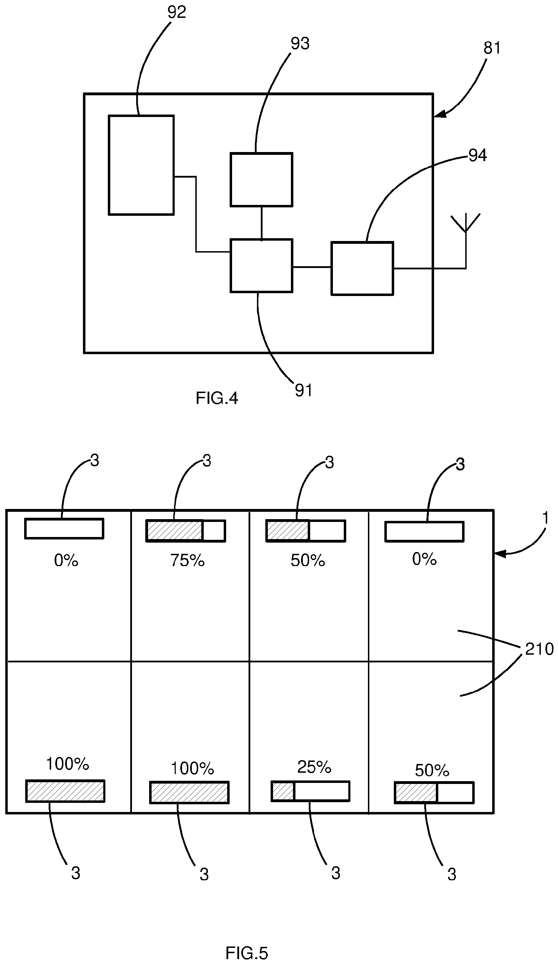

L'invention est ci-après décrite appliquée à la réalisation d'une installation domotique 100 représentée schématiquement sur la figure 5 sur une interface homme-machine d'un dispositif de gestion 1.
L'installation domotique 100 équipe un bâtiment 1 comprenant plusieurs locaux 210.
L'installation domotique comprend des appareils domotiques 3, par exemple 8 appareils domotiques de type store 3 comme représenté schématiquement sur la figure 1. Ces appareils sont avantageusement motorisés. Par la suite, ces appareils seront appelés appareils électriques ou appareils domotiques indifféremment.
Un bâtiment tertiaire 1, représenté sur la figure 1, comprend une pluralité d'ouvertures (notamment des fenêtres) 102 disposées sur des façades S, E, N, W (ces deux dernières n'étant pas visibles). Les ouvertures sont équipées d'appareils domotiques 3, en particulier d'écrans mobiles 3, notamment des écrans de fermeture, d'occultation ou de protection solaire, une partie de ceux-ci étant représentée en position fermée par des hachures horizontales sur les façades S et E.
Les écrans de protection solaire mobiles sont chacun pilotés par un actionneur 150, ce dernier permettant l'ouverture et la fermeture automatisée de l'écran. Les actionneurs sont généralement masqués dans des rails ou des caissons 9 lorsqu'ils sont installés et sont alors difficilement accessibles par l'intérieur ou l'extérieur du bâtiment.
L'automatisation du bâtiment, notamment des écrans via leurs actionneurs 150, basée sur la présence d'un moyen de commande central 28, de moyen de commandes locaux 14 et de capteurs divers 151 (présence, luminosité, température, etc), permet de gérer des paramètres du bâtiment notamment des paramètres de confort comme la thermique dans le bâtiment. Pour cela, les différents équipements (actionneurs, moyens de commande, capteurs) communiquent entre eux par le biais de réseaux NTW sans fil (radio notamment) ou filaires (bus câblés, courants porteurs). Un exemple d'installation est représenté en figure 2.
Le terme d'actionneur utilisé dans cette demande inclut notamment la partie électronique ou électromécanique permettant le contrôle du mouvement de l'écran ou le contrôle d'état d'une charge, par exemple d'une lampe, mais également les moyens électroniques de dialogue avec les différents autres équipements de l'installation.
L'installation peut aussi comprendre une passerelle et/ou une box domotique 170.
Ces appareils domotiques 3 équipent avantageusement les ouvertures 102 du bâtiment.
Le bâtiment comporte des ouvertures qui peuvent être des ouvrants (fenêtres ou portes), non représentés. Comme illustré sur la figure 3, les appareils peuvent comprendre un écran 2 et être disposés au niveau des ouvertures 102.

Les ouvertures comprennent au moins un cadre dormant et au moins une vitre. La vitre est disposée à l'intérieur du cadre dormant, en particulier dans une configuration assemblée d'une fenêtre.

Avantageusement, la fenêtre peut, en outre, comprendre au moins un ouvrant, non représenté.

Avantageusement, la vitre peut être soit montée dans le cadre dormant, dans le cas où celle-ci est fixe par rapport au cadre dormant, soit montée dans un cadre de l'ouvrant, dans le cas où celle-ci est mobile par rapport au cadre dormant, en particulier selon un mouvement de rotation, notamment dans le cas d'une fenêtre oscillante ou battante, ou selon un mouvement de translation, notamment dans le cas d'une fenêtre coulissante selon une direction horizontale ou verticale, ou selon deux mouvements de rotation, notamment dans le cas d'une fenêtre oscillo-battante. Un store 3 peut être placé à l'intérieur ou à l'extérieur de l'ossature du bâtiment, autrement dit, du côté intérieur ou extérieur du cadre dormant.

L'invention est ici décrite appliquée à des stores, mais peut s'appliquer à tout type de dispositif d'occultation et plus généralement à tout appareil domotique.

Chaque store comprend un dispositif d'entraînement motorisé 5. Le dispositif d'entraînement motorisé comprend au moins un actionneur électromécanique 150.

Avantageusement, le store comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 150.

Ainsi, l'écran 2 du store est enroulé sur le tube d'enroulement 4 ou déroulé autour de celui-ci, le tube d'enroulement 4 étant entraîné par le dispositif d'entraînement motorisé 5, en particulier par l'actionneur électromécanique 150.

De cette manière, l'écran 2 est mobile entre une position enroulée, en particulier haute, et une position déroulée (représentée sur la figure 3), en particulier basse, et inversement.

L'écran 2 du store 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 150, de sorte que l'actionneur électromécanique peut être inséré dans le tube d'enroulement, lors de l'assemblage du store.

L'actionneur électromécanique 150, en particulier de type tubulaire, permet de mettre en rotation le tube d'enroulement 4 autour d'un axe de rotation X, de sorte à déplacer, en particulier dérouler ou enrouler, l'écran du store.

Dans un état monté du store, l'actionneur électromécanique est inséré dans le tube d'enroulement.

De manière connue, le store peut comporter un tablier comprenant une toile formant l'écran du store, le tablier étant suspendu depuis le tube d'enroulement.

L'écran est configuré pour être déplacé, au moyen du dispositif d'entraînement motorisé 5, en particulier de l'actionneur électromécanique 150, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 150 est configuré pour entraîner, autrement dit entraîne, en déplacement l'écran, entre la première position de fin de course FdCH et la deuxième position de fin de course FdCB, et inversement, en vis-à-vis de la fenêtre, en particulier de la vitre.

Ici, les écrans sont disposés à l'intérieur du bâtiment 1.

En variante, les écrans peuvent être disposés à l'extérieur du bâtiment 1.

Avantageusement, le dispositif d'entraînement motorisé est commandé par une unité de commande 28, 14. L'unité de commande peut être, par exemple, une unité de commande locale 14 ou une unité de commande centrale 28.

Avantageusement, l'unité de commande locale peut être reliée, en liaison filaire ou non filaire, avec l'unité de commande centrale.

Avantageusement, l'unité de commande centrale 28 peut piloter l'unité de commande locale 14, ainsi que d'autres unités de commande locales 141, 142 similaires et réparties dans le bâtiment 1.

Le dispositif d'entraînement motorisé est, de préférence, configuré pour exécuter les commandes de déroulement ou d'enroulement de l'écran du store, pouvant être émises, notamment, par l'unité de commande locale ou l'unité de commande centrale.

L'installation 100 comprend :

- soit l'unité de commande locale 14,
- soit l'unité de commande centrale 28,
- soit l'unité de commande locale 14 et l'unité de commande centrale 28.

Avantageusement, l'installation 100 peut comprendre, en outre, des capteurs 151, notamment un capteur d'ensoleillement.

Du fait de la nature de l'installation décrite plus haut et des stores en faisant partie, il apparaît qu'un nombre important de tâches d'installation, de réglages et de configurations sont nécessaires afin que les stores fonctionnent de la manière la plus optimale possible dans le bâtiment, notamment en interaction avec d'autres appareils domotiques de l'installation domotique 100.

Afin de faciliter et d'organiser une phase de second oeuvre dans le bâtiment incluant la réalisation d'une installation domotique, un dispositif de gestion 81 a été mis au point.

Un mode de réalisation d'un tel dispositif de gestion 81 selon l'invention est décrit ci-après en référence à la figure 4.

Le dispositif de gestion est par exemple mis en oeuvre sur un ordinateur portable, tel que par exemple une tablette ou un téléphone, notamment un smartphone. En alternative, le dispositif de gestion peut être mis en oeuvre sur un serveur, notamment un serveur connecté au réseau internet. En alternative encore, le dispositif de gestion peut être mis en oeuvre sur une architecture distribuée sur plusieurs équipements. Par exemple, typiquement, le dispositif de gestion peut comprendre une interface homme-machine sur un équipement local et des moyens de calcul sur un équipement distant.

Le dispositif de gestion 81 comprend :

- une unité logique de traitement 91, comme un calculateur 91,
- une interface homme-machine 92, comme un écran tactile 92,
- une mémoire 93, et
- un élément de communication 94, comme un émetteur-récepteur 94, permettant d'envoyer et/ou de recevoir des signaux de télécommunication par voie filaire et/ou par voie non filaire.

Le dispositif de gestion, en particulier la mémoire et/ou l'unité logique de traitement, comprend tous les éléments matériels et/ou logiciels permettant de mettre en oeuvre le procédé objet de ce document, en particulier le procédé décrit ci-après. Ces éléments peuvent comprendre des moyens logiciels.

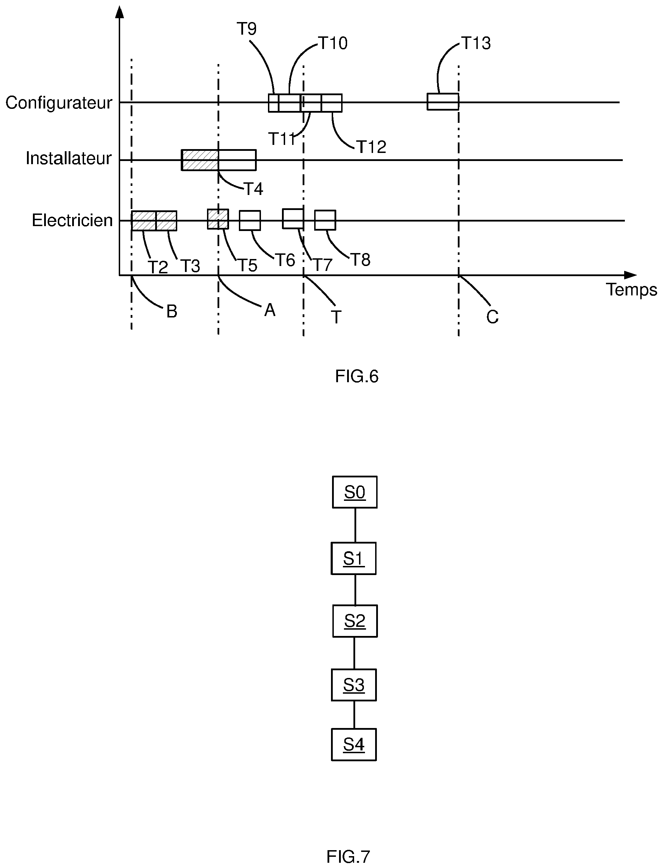

Un mode d'exécution d'un procédé de fonctionnement du dispositif de gestion 81 de la phase de second oeuvre de réalisation du bâtiment 100 est décrit ci-après en référence à la figure 7.

Le procédé comprend :

- une première étape S1 de définition d'au moins premier et un deuxième intervenants devant exécuter chacun au moins une tâche de la phase de second oeuvre,
- une deuxième étape S2 de définition d'un planning d'exécution des tâches de la phase de second oeuvre,
- une troisième étape S3 de calcul d'un degré d'exécution d'au moins une tâche de la phase de second oeuvre devant être exécutée par le premier intervenant, et
- une quatrième étape S4 de communication du degré d'exécution de ladite tâche de la phase de second oeuvre au moins au deuxième intervenant.

Avantageusement, l'étape S3 de calcul du degré d'exécution de l'au moins une tâche de la phase de second oeuvre est basée :

- sur une information fournie par le premier intervenant au dispositif de gestion, le premier intervenant ayant la charge d'exécuter la tâche, ou
- sur une information fournie automatiquement au dispositif de gestion à l'issue de l'exécution partielle ou totale de l'au moins une tâche, c'est-à-dire indirectement par le premier intervenant, sur la base d'une information fournie par les appareils installés, en conséquence d'installations effectuées par le premier intervenant, ou
- sur un temps chronologique en l'absence d'information contradictoire, c'est-à- dire basée sur le fait que l'opération se déroule comme prévu dans le planning.

Ce procédé est, par la suite, décrit appliqué à une phase de second oeuvre au cours de la laquelle des stores motorisés 3 sont installés dans le bâtiment 1. Cette phase de second oeuvre dite phase d'installation fait intervenir plusieurs intervenants, notamment :

- un coordinateur,
- un électricien,
- un installateur des stores, et
- un configurateur des stores.

Chaque intervenant est mentionné au singulier. Toutefois, chaque intervenant peut en fait être constitué par une équipe de personnes plus ou moins nombreuses, notamment en fonction du nombre de stores à installer ou du temps dédié à ces opérations ou ensemble de tâches d'installations.

Par exemple, lors d'une opération, les différents intervenants ont notamment la charge des tâches qui suivent :

- une tâche T1 d'organisation des tâches qui doivent être réalisées par les différents intervenants et qui est à la charge du coordinateur, la tâche d'organisation comprenant notamment la répartition des interventions dans le temps et une tâche de partage des informations techniques et/ou logistiques et/ou organisationnelles nécessaires à la bonne exécution de la phase d'installation,
- une tâche T2 de câblage des lignes électriques permettant d'alimenter, en énergie électrique, les stores et éventuellement des points de commande, cette tâche étant à la charge de l'électricien,
- une tâche T3 de raccordement des stores aux lignes électriques permettant d'alimenter, en énergie électrique, les stores, cette tâche étant à la charge de l'électricien et/ou de l'installateur,
- une tâche T4 de montage des stores dans le bâtiment incluant notamment (i) une fixation mécanique des stores à la structure du bâtiment, (ii) un réglage et un contrôle de configurations de base comme les limites de fin de course, (iii) une attribution d'un identifiant à chaque store, cette tâche étant à la charge de l'installateur,
- une tâche T5 de montage des points de commande des stores, comme des interrupteurs ou des émetteurs radiofréquence dans le bâtiment, cette tâche étant à la charge de l'électricien et/ou de l'installateur,

- une tâche T6 de distribution électrique et câblage des points des commande des stores pour assurer leur liaison aux stores, cette tâche étant à la charge de l'électricien,
- une tâche T7 de montage de passerelles et/ou de box domotiques 170, cette tâche étant à la charge de l'électricien et/ou de l'installateur,
- une tâche T8 de distribution électrique et câblage des passerelles et/ou des box domotiques, cette tâche étant à la charge de l'électricien,
- une tâche T9 de découverte et recensement des stores installés, cette tâche étant à la charge du configurateur,
- une tâche T10 d'association des stores recensés à leurs localisations dans le bâtiment, cette tâche étant à la charge du configurateur,
- une tâche T11 d'association des stores en groupes fonctionnels permettant d'assurer des fonctions dans des zones et de définition d'automatismes destinés à assurer ces fonctions dans ces zones, cette tâche étant à la charge du configurateur,
- une tâche T12 d'appairage des stores, des passerelles, des box domotiques et des points de commande pour assurer leurs commandes, cette tâche étant à la charge du configurateur,
- une tâche T13 de démonstration et de formation éventuelle des utilisateurs finaux, cette tâche étant à la charge du configurateur.

L'ordre dans lequel ces tâches sont référencées est à considérer à titre d'exemple.

Préalablement à la première étape, au niveau du dispositif de gestion, on définit avantageusement, dans une étape initiale S0 ou étape d'identification du projet, par exemple la nature du projet, le bâtiment et sa localisation, un descriptif du bâtiment, par exemple le nombre d'étages, le nombres de façades différentes. On enregistre de préférence différentes valeurs de paramètres associés à ce projet. Par exemple, on enregistre des valeurs de paramètre indiquant :

- que le projet est un projet d'une phase d'installation d'appareils, et/ou
- que les appareils sont des appareils rapportés sur le bâtiment, et/ou
- que le projet est un projet domotique.

Dans cette étape préalable, on définit également un nom de projet afin de distinguer le projet, parmi d'autres projets pouvant concerner le même bâtiment, notamment la même phase de second oeuvre, une autre phase de second oeuvre sur le même bâtiment ou pouvant concerner d'autres bâtiments ou parties de bâtiments.

Dans la première étape S1, on définit un profil pour plusieurs intervenants comme devant exécuter chacun au moins une tâche de la phase de second oeuvre. Outre le profil du coordinateur, on définit un profil pour l'électricien, un profil pour l'installateur et un profil pour le configurateur, chacun des intervenants étant susceptible d'effectuer au moins une tâche dans la phase d'installation. Pour chaque profil d'intervenant, on définit et on enregistre par exemple toute combinaison d'une ou plusieurs des informations qui suivent :

- un identifiant permettant d'identifier l'intervenant, en particulier permettant de le distinguer des autres intervenants, et/ou
- un droit à la consultation du projet, et/ou
- un droit à modifier certaines caractéristiques du projet, et/ou
- un droit à valider une information indiquant qu'une tâche est terminée, et/ou
- un droit à recevoir des informations d'avancement du projet (degré d'exécution d'une étape, degré d'avancement de la phase d'installation), notamment par message électronique et/ou par sms et/ou par message disponible au niveau du dispositif de gestion, et/ou
- des informations administratives relatives à des certifications professionnelles de l'intervenant et/ou à des contrats d'assurances souscrits par l'intervenant et/ou à la facturation des interventions de l'intervenant.

L'étape de définition du profil d'au moins un intervenant comprend avantageusement une sous-étape de déclaration d'un intervenant et une sous-étape de validation de cet intervenant.

Cette première étape est de préférence mise en oeuvre par des actions de saisie du coordinateur. Le dispositif de gestion peut par exemple proposer au coordinateur une saisie guidée. En alternative, les actions de saisie ou certaines actions de saisie peuvent être mises en oeuvre par d'autres intervenants.

Dans la deuxième étape S2, on définit un ordre ou un planning d'exécution des tâches de la phase de second oeuvre, notamment de la phase d'installation des stores. Cette deuxième étape est de préférence mise en oeuvre par des actions de saisie du coordinateur. Cette étape peut être réalisée sur la base d'une proposition de planning adressée par le coordinateur aux autres intervenants au travers du dispositif de gestion. Cette proposition peut être validée ou modifiée ou refusée par chaque intervenant. Une fois un accord sur le planning trouvé, ce planning peut être validé ou accepté par tous les intervenants. Cette validation ou acceptation peut être obtenue au travers du dispositif de gestion. Un exemple de représentation d'un tel planning est par exemple donné sur la figure 6.

L'étape de définition du planning d'exécution des tâches de la phase de second oeuvre peut comprendre une définition d'une quantité d'appareils électriques à installer. Comme il sera vu plus bas, cette quantité peut être utilisée pour définir un degré d'exécution d'une tâche, voire un état d'avancement de la phase d'installation. Plus généralement, l'étape de définition du planning d'exécution des tâches de la phase de second oeuvre peut comprendre une définition d'une tâche d'installation d'au moins un appareil électrique à installer. Dans cette hypothèse, l'étape de calcul du degré d'exécution d'au moins une tâche de la phase de second oeuvre est avantageusement automatiquement basée sur un état d'installation de l'au moins un appareil électrique.

Avantageusement, l'étape de définition du planning d'exécution des tâches de la phase de second oeuvre comprend :

- l'utilisation d'un projet type servant de base pour la définition du planning, un intervenant sélectionnant les tâches qui permettent de définir le planning adapté à la phase de second-oeuvre à réaliser, et/ou
- la sélection d'au moins une opération d'installation entraînant la sélection de tâches associées à ou constituant l'au moins une opération d'installation, et/ou
- la sélection d'au moins une fonction, par exemple un fonctionnement particulier souhaité lors d'une phase ultérieure d'utilisation du bâtiment, entraînant la sélection de tâches associées à l'au moins une fonction.

Typiquement, dans la cas d'une phase d'installation de stores comme évoqué précédemment, le dispositif de gestion peut inclure un projet type d'installation de stores dans sa mémoire avec des tâches types déjà associées à un tel projet, comme :

- une tâche de montage des stores,
- une tâche de câblage des alimentations électriques, et
- une tâche de configuration des stores.

Dans un tel cas, le coordinateur peut utiliser ces tâches types en les positionnant temporellement sur le planning et en définissant leurs étendues temporelles. Bien entendu, toutes les caractéristiques de ces tâches types peuvent être modifiées pour être adaptées au projet qui doit être défini. Par ailleurs, des tâches complémentaires peuvent être créées et ajoutées au planning pour définir aussi finement que possible le planning envisagé.

En complément ou alternative, c'est une fonction, comme ici une fonction de protection solaire qui peut être sélectionnée dans le dispositif de gestion et qui peut donner lieu à une sélection automatique de tâches types telles qu'évoquées précédemment.

De préférence, dans l'étape de définition du planning d'exécution des tâches de la phase de second oeuvre, une saisie guidée, étape par étape, est mise en oeuvre par le dispositif de gestion. Ceci permet à l'intervenant en charge de définir le planning de sélectionner toutes les tâches nécessaires à la définition du planning. Des sélections de tâches existantes permettent de simplifier la réalisation du planning.

Dans la troisième étape S3, on calcule un degré d'exécution d'au moins une tâche de la phase de second oeuvre, notamment de la phase d'installation des stores, devant être exécutée par le premier intervenant. Le calcul peut être réalisé sur la base d'une ou plusieurs informations fournies par l'un des intervenants devant exécuter ladite tâche. L'information peut être saisie par l'intervenant à l'aide d'un outil de configuration et l'information saisie peut être stockée en mémoire associée au profil de l'intervenant. La saisie peut être réalisée alors que l'outil est hors ligne (non connecté à un réseau de communication). L'information saisie peut ensuite être transmise au dispositif de gestion dès que l'outil de configuration est de nouveau connecté à un réseau de communication.

L'étape de calcul du degré d'exécution de ladite tâche de la phase de second oeuvre peut comprendre un comptage d'un nombre de sous-tâches de la phase de second oeuvre qui sont considérées comme terminées. Par exemple, dans l'hypothèse de la tâche T4 de montage des stores, l'installateur peut renseigner le dispositif de gestion à chaque fois qu'un montage d'un store est terminé. Chaque montage d'un store est alors une sous-tâche. Dans l'hypothèse où 8 stores doivent être montés lors de la tâche T4, après que l'installateur a indiqué qu'il a terminé le montage de 6 stores, le dispositif de gestion peut calculer et indiquer que la tâche T4 est réalisée à 75% (degré d'exécution de 6 montages sur 8 prévus, donc 75% d'avancement de la tâche T4). En complément, si la sous-tâche présente une opération de communication automatique au dispositif de gestion, par exemple du fait d'une communication entre les stores motorisés et le dispositif de gestion, l'intervenant peut être dispensé de fournir de manière active une information d'avancement de la tâche qu'il est en train de réaliser, cette information étant alors fournie automatiquement par les stores motorisés, notamment à l'issue de l'exécution partielle ou totale de l'au moins une tâche. Ainsi, l'étape de calcul du degré d'exécution de la tâche peut comprendre un comptage du nombre d'appareils électriques installés. Plus généralement, c'est l'état d'installation d'un ou plusieurs appareils électriques qui est automatiquement utilisé pour déterminer le degré d'exécution de la tâche. Par exemple, dans le cas d'un store motorisé, une tâche d'installation peut comprendre une sous-tâche d'alimentation électrique du store dans le bâtiment, puis une sous-tâche de configuration du store. La mise en oeuvre de la sous-tâche d'alimentation électrique peut être détectée automatiquement par une première connexion du store au réseau électrique déclenchant automatiquement la diffusion d'un premier signal d'information par le store. La fin de la sous-tâche de configuration peut être détectée automatiquement par la diffusion d'un deuxième signal d'information par le store, les premier et deuxième signaux étant différenciés. Par exemple, les états suivants du store et leurs correspondances en matière de degré d'exécution de la tâche peuvent avoir été préalablement définis ou établis :

- store non alimenté et non configuré (aucun des premier et deuxième signaux détectés) : 0% d'exécution de la tâche,
- store alimenté mais non configuré (seul le premier signal a été détecté) : 60% d'exécution de la tâche,
- store alimenté et configuré (les premier et deuxième signaux ont été détectés) : 100% d'exécution de la tâche.

Par exemple, dans le cas d'une tâche d'installation de 6 stores motorisés :

- 1 store peut être non alimenté et non configuré (aucun des premier et deuxième signaux détectés),
- 2 stores peuvent être alimentés mais non configurés (seul le premier signal a été détecté),
- 3 stores peuvent être alimentés et configurés (les premier et deuxième signaux ont été détectés.

Le degré d'exécution de la tâche est alors donné avec les hypothèses précédentes par la formule :

$$(1{\times}0\% + 2{\times}60\% + 3{\times}100\%)/6 = 70\%$$

Plus généralement, l'état d'installation peut être fourni par les appareils électriques eux-mêmes (comme vu précédemment), mais peut alternativement ou complémentairement être fourni par tout dispositif utilisé lors de la tâche. Ainsi, l'état d'installation peut être fourni par l'outil de configuration utilisé lors de la tâche. Dans cette hypothèse, ce peut être un signal émis automatiquement par l'outil de configuration qui est utilisé pour déterminer l'état d'installation et donc le degré d'exécution de la tâche.

Des stores ont précédemment été décrits comme exemples d'appareils électriques. Toutefois, l'invention peut être mise en oeuvre avec tout autre type d'appareil électrique, en particulier avec des volets roulants motorisés.

En alternative, le calcul du degré d'exécution de la tâche peut être basé sur le temps chronologique qui s'écoule depuis une date donnée et le planning prévisionnel, en l'absence d'information contradictoire fournie au dispositif de gestion. Par exemple, si pour exécuter une tâche, il est alloué, à un intervenant, selon le planning, une semaine de 5 jours de travail pour effectuer la tâche (soit 10 demi-journées), après 3 demi-journées passées, le dispositif de gestion indique que la tâche est effectuée à 30% (degré d'exécution de 30%, 3 demi-journées sur 10 prévues). Une telle information est calculée, et éventuellement diffusée, par défaut en l'absence d'information de l'un des intervenants indiquant que la tâche ne se déroule pas comme prévu selon le planning. Alternativement, l'information est calculée sur la base du temps chronologique et d'un retour d'état de l'intervenant indiquant, par exemple une fois par jour, que sa ou ses tâches se déroulent sensiblement comme prévu.

Avantageusement, une telle étape de calcul du degré d'exécution d'une tâche de la phase de second oeuvre est réitérée pour chaque tâche devant être exécutée, par chaque intervenant. Cette étape de calcul peut être exécutée notamment lors d'une mise à jour d'une information par un des intervenants. Elle peut être exécutée aussi de manière régulière, par exemple une fois par jour. Ainsi, à un instant donné, le dispositif de gestion est avantageusement en mesure de déterminer les degrés d'exécution de chacune des tâches qui doivent être exécutées au cours de la phase de second oeuvre.

Dans la quatrième étape S4, le dispositif de gestion communique le degré d'exécution d'une tâche de la phase de second oeuvre associée à un premier intervenant à au moins un deuxième intervenant, notamment à l'ensemble des intervenants, en particulier à l'ensemble des intervenants concernés ou devant intervenir après la réalisation de la tâche exécutée par le premier intervenant, afin de réaliser une autre tâche. La communication au deuxième intervenant du degré d'exécution de la tâche peut être réalisée par envoi de messages électroniques et/ou par envoi de sms et/ou par mise à disposition de messages au niveau du dispositif de gestion.

Ainsi, l'étape de communication du degré d'exécution de la tâche peut comprendre :

- une sous-étape d'envoi d'un message au deuxième intervenant, notamment un message indiquant qu'il peut intervenir pour exécuter au moins une autre tâche définie lors de l'étape de définition, et/ou
- une sous-étape d'affichage du degré d'exécution de la tâche sur une interface accessible au premier et au deuxième intervenant.

Avantageusement, la sous-étape d'affichage comprend :

- comme représenté sur la figure 5, un affichage d'un plan du bâtiment et des représentations schématiques des tâches de la phase d'installation du projet en différents lieux du plan du bâtiment, la représentation schématique de chaque tâche indiquant de préférence un degré d'exécution de la tâche correspondante, et/ou
- comme représenté sur la figure 6, un affichage d'un graphique sur lequel sont positionnées des représentations schématiques des tâches le long d'un axe temporel, les représentations des tâches indiquant de préférence un degré d'exécution des tâches.

Sur la figure 5, les appareils domotiques 3 sont avantageusement représentés dans les locaux 210 du bâtiment 1. Les appareils domotiques sont ainsi localisés relativement au bâtiment, notamment par leur appartenance à une zone, une pièce ou une façade du bâtiment. Par ailleurs, les appareils domotiques sont aussi associés à une représentation sous la forme d'une barre de progression indiquant comme sur la figure 5, le degré d'exécution d'une tâche concernant l'appareil domotique considéré, dans l'exemple le store, (par exemple le degré d'exécution de la tâche T2 à T13 mentionnée plus haut) relative à l'installation du store.

Sur la figure 6, un autre affichage du dispositif de gestion est représenté. Il s'agit d'un graphique temporel montrant, en ordonnées, différents intervenants devant agir dans une phase de d'installation des stores et, en abscisses, le temps. Les différentes tâches T2 à T13 ou interventions devant être exécutées dans cette phase d'installation des stores sont représentées par des rectangles dont les longueurs représentent les durées prévues d'intervention dans le planning. Les dates de début et de fin d'exécution des tâches sont ainsi représentées par les limites gauche et droite des rectangles. Les rectangles représentant les tâches sont en outre disposés en ordonnées en vis-à-vis des mentions des intervenants responsables de l'exécution de ces tâches. Sur une telle représentation, chaque rectangle peut apparaître sous la forme d'une barre de progression indiquant le degré d'exécution de chacune des tâches. Par exemple, sur la figure 6 :

- les tâches T2, T3 et T5 apparaissent terminées,
- la tâche T4 apparaît à moitié réalisée, et
- les tâches T6 à T13 apparaissent non commencées.

En outre, le procédé de fonctionnement peut aussi comprendre :

- une étape de calcul d'un degré d'avancement de la phase de second oeuvre et, en particulier une étape de calcul d'un degré d'avancement de la phase d'installation des stores faisant partie de la phase de second oeuvre et comprenant les tâches énumérées plus haut, et
- une étape d'affichage du degré d'avancement de la phase de second oeuvre, en particulier une étape d'affichage du degré d'avancement de la phase d'installation des stores.

Une telle étape de calcul ou de détermination du degré d'avancement peut s'appuyer sur les calculs des degrés d'exécution de chacune des tâches qui constituent ensemble la phase. Par exemple, un degré d'avancement de la phase peut être déterminé comme le rapport :

- de la somme des durées cumulées des étapes déjà effectuées (au *prorata temporis* de leur exécutions partielles éventuelles), sur
- la somme des durées cumulées de toutes les étapes constituant la phase.

Un autre exemple de détermination du degré d'avancement de la phase peut être comme suit. Sur le graphique de la figure 6, on définit la date A (la plus antérieure) correspondant à un état d'exécution non terminé d'une tâche de la phase. On connaît par ailleurs la date B de début de la phase et la date C de fin de la phase. L'état d'avancement de la phase peut être alors défini par la formule (A-B)/(C-B), avec A-B et C-B exprimés en jours par exemple.

Ainsi, le degré d'avancement peut être défini :

- par le calcul d'avancement temporel défini ci-dessus en relation avec la figure 6, ou,
- par le biais de retours d'informations de la part des différents intervenants comme décrit en relation à la figure 5, ou
- par une combinaison de ces deux méthodes.

La date courante T peut aussi être représentée sur un affichage du planning, à l'attention de l'utilisateur visualisant ce planning, afin de lui fournir ou de compléter des informations d'avancée de l'exécution des tâches. Cela permet aussi de visualiser de manière simple quelles sont les tâches achevées en avance et quelles sont les tâches pour lesquelles les intervenants sont en retard.

Avantageusement, le procédé de fonctionnement comprend :

- une étape d'enregistrement de données numériques, par exemple des données numériques d'un plan d'architecture, sur un support numérique par un premier intervenant, et
- une étape d'attribution, à un deuxième intervenant, de droits d'accès en lecture et/ou de modifications sur ces données numériques.

Ceci permet une communication d'information et de documentation « sans papier » entre les différents intervenants. Par ailleurs, ceci permet aussi d'obtenir une traçabilité des échanges d'informations effectués entre les différents intervenants. Les dates de mise à disposition, les dates de modification des différents documents échangés et les différentes versions des documents échangés au travers du dispositif de gestion peuvent être archivées au sein du dispositif de gestion. La documentation peut inclure des schémas électriques mais aussi des schémas de localisation des différents appareils avec leur lieu d'implantation dans le bâtiment.

De préférence, à tout moment pendant la réalisation de la phase définie dans le planning, un intervenant peut enregistrer une date de fin d'exécution d'une tâche. Selon le moment d'un tel enregistrement, cette action peut avoir des conséquences sur le planning. En effet, en cas de dépassement de temps imparti pour exécuter une tâche, une nouvelle mise en oeuvre de l'étape de définition du planning d'exécution des tâches de la phase de second oeuvre peut être effectuée. Cette nouvelle mise en oeuvre peut comprendre un recalcul automatique du planning et déclencher une nouvelle présentation d'un planning modifié aux différents intervenants concernés qui peuvent de nouveau accepter, modifier ou refuser le planning recalculé. Un fonctionnement similaire peut être mis en oeuvre lorsqu'un intervenant signale avoir terminé la tâche dont il avait la charge de manière précoce en enregistrant une date de fin d'exécution d'une tâche antérieure à la date de fin définie au planning.

De manière avantageuse, l'étape d'enregistrement d'une date de fin d'exécution d'une tâche peut être déclenchée par une détection automatique d'une fin d'exécution de la tâche. Ceci peut alors être effectué sans action spécifique d'un intervenant. En effet, la détection automatique peut par exemple être la conséquence :

- d'une mise à jour, sur un serveur, de données de fonctionnement d'un appareil électrique qui a été installé dans le bâtiment, et/ou
- d'un message émis par un appareil électrique qui a été installé dans le bâtiment.

En effet, dans certaines situations, les appareils installés peuvent échanger, dès leur mise en service, ou peu de temps après leur mise en service, des informations directement avec le dispositif de gestion ou avec d'autres appareils liés au dispositif de gestion. En conséquence, le dispositif de gestion peut être informé de l'état d'installation d'appareils sans intervention spécifique d'un intervenant pour spécifier cet état.

Dans ce document, par « automatique » ou « automatiquement », on entend qu'une action est réalisée sans qu'un intervenant n'ait à exécuter une opération spécifique pour déclencher l'action. En d'autres termes, une information est transmise automatiquement si elle découle de la mise en oeuvre d'une autre action dont le but premier n'était pas de transmettre l'information. Par exemple, lorsqu'un intervenant branche un appareil électrique et qu'en conséquence de ce branchement, une information est transmise, cette information est transmise automatiquement. Par contre, lorsque l'intervenant appuie sur un bouton de commande dédié à la transmission de l'information, cette information n'est pas transmise automatiquement.

**Revendications**

1. Procédé de fonctionnement d'un dispositif de gestion (81) d'une phase de second oeuvre de réalisation d'un bâtiment (1), le procédé comprenant :

   - une étape (S1) de définition d'au moins un premier intervenant et un deuxième intervenant devant exécuter chacun au moins une tâche de la phase de second oeuvre,
   - une étape (S2) de définition d'un planning d'exécution des tâches de la phase de second oeuvre, l'étape de définition du planning d'exécution des tâches de la phase de second oeuvre comprenant une définition d'une tâche d'installation d'au moins un appareil électrique à installer,
   - une étape (S3) de calcul d'un degré d'exécution d'au moins une tâche de la phase de second oeuvre devant être exécutée par le premier intervenant, l'étape de calcul du degré d'exécution de l'au moins une tâche de la phase de second oeuvre étant automatiquement basée sur un état d'installation de l'au moins un appareil électrique, et
   - une étape (S4) de communication du degré d'exécution de l'au moins une tâche de la phase de second oeuvre au moins au deuxième intervenant.

2. Procédé de fonctionnement selon la revendication 1, **caractérisé en ce que** l'étape de définition d'au moins un intervenant comprend une sous-étape de déclaration d'un intervenant et une sous-étape de validation de cet intervenant.

3. Procédé de fonctionnement selon la revendication 1 ou 2, **caractérisé en ce que** l'étape de calcul du degré d'exécution de l'au moins une tâche de la phase de second oeuvre comprend un comptage d'un nombre de sous-tâches de la phase de second oeuvre qui sont terminées.

4. Procédé de fonctionnement selon l'une des revendications précédentes, **caractérisé en ce que** l'étape de calcul du degré d'exécution de l'au moins une tâche de la phase de second oeuvre est réitérée au moins pour chaque tâche devant être exécutée à une date donnée du planning.

5. Procédé de fonctionnement selon l'une des revendications précédentes, **caractérisé en ce que** l'étape (S3) de calcul d'un degré d'exécution d'au moins une tâche de la phase de second oeuvre est basée :

   - sur une information fournie par le premier intervenant au dispositif de gestion ou
   - sur une information fournie automatiquement au dispositif de gestion à l'issue de l'exécution partielle ou totale de l'au moins une tâche, ou
   - sur un temps chronologique en l'absence d'information contradictoire.

6. Procédé de fonctionnement selon l'une des revendications précédentes, **caractérisé en ce que** le procédé comprend une étape de calcul d'un degré d'avancement de la phase de second oeuvre.

7. Procédé de fonctionnement selon la revendication précédente, **caractérisé en ce que** le procédé comprend en outre une étape d'affichage du degré d'avancement de la phase de second oeuvre, l'étape d'affichage pouvant notamment comprendre :

- un affichage d'un plan du bâtiment et de représentations des tâches en différents lieux du plan du bâtiment, les représentations des tâches indiquant de préférence un degré d'exécution d'une tâche, et/ou
- un affichage d'un graphique sur lequel sont positionnées des représentations des tâches le long d'un axe temporel, les représentations des tâches indiquant de préférence un degré d'exécution des tâches.

**8.** Procédé de fonctionnement selon l'une des revendications précédentes, **caractérisé en ce que** l'étape de définition du planning d'exécution des tâches de la phase de second oeuvre comprend une définition d'une quantité d'appareils électriques à installer et **en ce que** l'étape de calcul du degré d'exécution de l'au moins une tâche de la phase de second oeuvre comprend un comptage automatique du nombre d'appareils électriques installés.

**9.** Procédé de fonctionnement selon l'une des revendications précédentes, **caractérisé en ce que** l'étape de communication du degré d'exécution de l'au moins une tâche de la phase de second oeuvre comprend :

- une sous-étape d'envoi d'un message au deuxième intervenant, notamment un message indiquant qu'il peut intervenir pour exécuter au moins une tâche définie lors de l'étape de définition, et/ou
- une sous-étape d'affichage du degré d'exécution de l'au moins une tâche de phase de second oeuvre sur une interface accessible au premier et au deuxième intervenant.

**10.** Procédé de fonctionnement selon l'une des revendications précédentes, **caractérisé en ce que** le procédé de fonctionnement comprend :

- une étape d'enregistrement de données numériques, par exemple des données numériques d'un plan d'architecture, sur un support numérique par le premier intervenant, et
- une étape d'attribution, au deuxième intervenant, de droits d'accès et de modifications sur ces données numériques.

**11.** Procédé de fonctionnement selon l'une des revendications précédentes, **caractérisé en ce que** le procédé de fonctionnement comprend :

- une étape d'enregistrement d'une date de fin d'exécution d'une tâche, et
- de préférence, en cas de dépassement de temps imparti pour exécuter une tâche, une nouvelle mise en oeuvre de l'étape de définition du planning d'exécution des tâches de la phase de second oeuvre.

**12.** Procédé de fonctionnement selon la revendication précédente, **caractérisé en ce que** l'étape d'enregistrement est déclenchée par une détection automatique d'une fin d'exécution de la tâche, la détection automatique étant par exemple la conséquence :

- d'une mise à jour, sur un serveur, de données de fonctionnement d'un appareil électrique qui a été installé dans le bâtiment, et/ou
- d'un message émis par un appareil électrique qui a été installé dans le bâtiment.

**13.** Procédé de fonctionnement selon l'une des revendications précédentes, **caractérisé en ce que** l'étape de définition du planning d'exécution des tâches de la phase de second oeuvre comprend :

- l'utilisation d'un projet type servant de base pour la définition du planning, un utilisateur sélectionnant les tâches qui permettent de définir le planning adapté à la phase de second-oeuvre à réaliser, et/ou
- la sélection d'au moins une fonction entraînant la sélection de tâches associées à l'au moins une fonction.

**14.** Procédé de fonctionnement selon l'une des revendications précédentes, **caractérisé en ce que** l'étape de définition du planning d'exécution des tâches de la phase de second oeuvre comprend une saisie guidée, étape par étape, pour que les tâches nécessaires à la définition du planning soient sélectionnées.

**15.** Dispositif de gestion (81) comprenant des éléments (91, 92, 93, 94) matériels et/ou logiciels mettant en oeuvre le procédé selon l'une des revendications précédentes, notamment des éléments matériels (91, 92, 93, 94) et/ou logiciels conçus pour mettre en oeuvre le procédé selon l'une des revendications précédentes.

Fig. 1

Fig. 2

FIG.3

FIG.4

FIG.5

EP 4 339 860 A1

FIG.6

FIG.7

16

Europäisches
Patentamt

European
Patent Office

Office européen
des brevets

## RAPPORT DE RECHERCHE EUROPEENNE

Numéro de la demande

EP 23 19 7011

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | AU 2021 106 967 A4 (CONQUM SYSTEMS LTD [IL]) 25 novembre 2021 (2021-11-25) <br> * abrégé * <br> * pages 1-3 * <br> * pages 8-11 * <br> * pages 15-17; figure 4 * <br> * pages 19, 20; figures 15, 16 * <br> * pages 27-29; figures 31-37 * <br> * page 22; figure 21 * <br> ----- | 1-15 | INV. <br> G06Q10/0631 <br> G06Q10/10 <br> G06Q50/08 |
| A | US 6 842 760 B1 (DORGAN CHAD BARRY [US] ET AL) 11 janvier 2005 (2005-01-11) <br> * abrégé * <br> * colonne 4, ligne 31 – colonne 6, ligne 32 * <br> * colonne 11, ligne 24 – colonne 13, ligne 29; figures 9-11 * <br> ----- | 1-15 | |
| A | JOERN PLOENNIGS ET AL: "Holistic design of wireless building automation systems", EMERGING TECHNOLOGIES&FACTORY AUTOMATION (ETFA), 2011 IEEE 16TH CONFERENCE ON, IEEE, <br> 5 septembre 2011 (2011-09-05), pages 1-9, XP031961419, <br> DOI: 10.1109/ETFA.2011.6059107 <br> ISBN: 978-1-4577-0017-0 <br> * abrégé * <br> * section 4.6 * <br> ----- <br> -/-- | 1,15 | DOMAINES TECHNIQUES RECHERCHES (IPC) <br><br> G06Q |

Le présent rapport a été établi pour toutes les revendications

| Lieu de la recherche | Date d'achèvement de la recherche | Examinateur |
|---|---|---|
| Munich | 23 janvier 2024 | Dedek, Frédéric |

page 1 de 2

**RAPPORT DE RECHERCHE EUROPEENNE**

Numéro de la demande

**EP 23 19 7011**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Ali Montaser: "Automated Site Data Acquisition for Effective Project Control", Thesis, 1 décembre 2013 (2013-12-01), pages 1-325, XP055611710, Extrait de l'Internet: URL:https://spectrum.library.concordia.ca/978609/1/Montaser_PhD_S2014.pdf [extrait le 2019-08-08] * le document en entier * ----- | 1-15 | |
| A | CHIARA CANTÃ1 ET AL: "Roles of actors in combining resources into complex solutions", JOURNAL OF BUSINESS RESEARCH, ELSEVIER, AMSTERDAM, NL, vol. 65, no. 2, 1 novembre 2010 (2010-11-01), pages 139-150, XP028435584, ISSN: 0148-2963, DOI: 10.1016/J.JBUSRES.2011.05.013 [extrait le 2011-05-30] * abrégé * ----- | 1,15 | |
| A | FR 3 118 358 A1 (SOMFY ACTIVITES SA [FR]) 24 juin 2022 (2022-06-24) * abrégé * ----- | 12 | **DOMAINES TECHNIQUES RECHERCHES (IPC)** |
| A | EP 2 776 895 B1 (SOMFY ACTIVITES SA [FR]) 3 mars 2021 (2021-03-03) * abrégé * ----- | 12 | |

Le présent rapport a été établi pour toutes les revendications

| Lieu de la recherche | Date d'achèvement de la recherche | Examinateur |
|---|---|---|
| Munich | 23 janvier 2024 | Dedek, Frédéric |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

**EP 23 19 7011**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**23-01-2024**

| Document brevet cité au rapport de recherche | | Date de publication | Membre(s) de la famille de brevet(s) | | Date de publication |
|---|---|---|---|---|---|
| AU 2021106967 | A4 | 25-11-2021 | AUCUN | | |
| US 6842760 | B1 | 11-01-2005 | AUCUN | | |
| FR 3118358 | A1 | 24-06-2022 | EP | 4263997 A1 | 25-10-2023 |
| | | | FR | 3118358 A1 | 24-06-2022 |
| | | | WO | 2022129530 A1 | 23-06-2022 |
| EP 2776895 | B1 | 03-03-2021 | BR | 112014010453 A2 | 13-06-2017 |
| | | | BR | 112014011012 A2 | 06-06-2017 |
| | | | CN | 103917929 A | 09-07-2014 |
| | | | CN | 104025092 A | 03-09-2014 |
| | | | EP | 2776895 A1 | 17-09-2014 |
| | | | EP | 2776956 A2 | 17-09-2014 |
| | | | KR | 20140086993 A | 08-07-2014 |
| | | | KR | 20140089554 A | 15-07-2014 |
| | | | US | 2014288715 A1 | 25-09-2014 |
| | | | US | 2014316580 A1 | 23-10-2014 |
| | | | WO | 2013068400 A1 | 16-05-2013 |
| | | | WO | 2013068408 A2 | 16-05-2013 |

EPO FORM P0460

Pour tout renseignement concernant cette annexe : voir Journal Officiel de l'Office européen des brevets, No.12/82